# EUROPÄISCHE PATENTSCHRIFT

(11) **EP 1 330 809 B1**
(45) Veröffentlichungstag und Bekanntmachung des Hinweises auf die Patenterteilung: **04.08.2004**
(21) Anmeldenummer: 01990380.6
(22) Anmeldetag: 31.10.2001
(51) Int. Cl.: G09B 23/28

(54) **SIMULATORVORRICHTUNG MIT ZUMINDEST ZWEI BEWEGUNGSFREIHEITSGRADEN FÜR EIN INSTRUMENT**
SIMULATING DEVICE WITH AT LEAST TWO DEGREES OF FREEDOM FOR AN INSTRUMENT
DISPOSITIF SIMULATEUR A AU MOINS DEUX DEGRES DE LIBERTE DESTINE A UN INSTRUMENT

(30) Priorität: 03.11.2000 DE 10055294
(43) Veröffentlichungstag der Anmeldung: 30.07.2003
(73) Patentinhaber: Karl Storz GmbH & Co. KG, 78532 Tuttlingen (DE)
(72) Erfinder: IRION, Klaus, M., 78576 Liptingen (DE); BÖHM, Ralph, 78531 Bodman-Ludwigshafen (DE); KOLBERG, Stefan, 86316 Friedberg-Bachern (DE); VIEBACH, Thomas, 86316 Friedberg (DE)
(74) Vertreter: Heuckeroth, Volker, Dr.
(86) Internationale Anmeldenummer: PCT/EP2001/012658
(87) Internationale Veröffentlichungsnummer: WO 2002/037451

(56) Entgegenhaltungen:
- WO-A-01/54587
- WO-A-97/19440

## Beschreibung

Die Erfindung betrifft eine Simulatorvorrichtung mit zumindest zwei Bewegungsfreiheitsgraden für ein Instrument, das einen länglichen Schaft aufweist, mit einer Halteeinrichtung für das Instrument, wobei die Halteeinrichtung so ausgebildet ist, daß das Instrument zumindest einen ersten Freiheitsgrad einer Drehbewegung um eine Längsachse des Schafts und zumindest einen zweiten Freiheitsgrad einer translatorischen Bewegung in Richtung des Schafts besitzt, wobei die Halteeinrichtung eine Getriebeanordnung für den ersten und zweiten Freiheitsgrad aufweist.

Eine derartige Simulatorvorrichtung ist aus der EP-A-0 970 662 bekannt.

Allgemein wird eine solche Simulatorvorrichtung als Schnittstelle zwischen einer Bedienungsperson und einem Instrument in Simulatoren verwendet. Eine spezielle Verwendung, auf die sich die folgende Beschreibung bezieht, ohne daß die vorliegende Erfindung darauf beschränkt ist, ist die Integration einer eingangs genannten Simulatorvorrichtung in einem Simulator zur Simulation eines minimal-invasiven chirurgischen Eingriffs an einem menschlichen oder tierischen Körper.

Der Begriff "Instrument" ist im Sinne der vorliegenden Erfindung allgemein zu verstehen, und kann bei einer medizinischen Simulation ein Endoskop, ein Arbeitsinstrument, wie eine Schere, Zange, ein Dissektor, Klemmenapplikator usw. sein.

Die minimal-invasive Chirurgie hat in den letzten Jahren gegenüber der offenen Chirurgie deutlich an Bedeutung gewonnen. Bei der minimal-invasiven Chirurgie werden durch minimale Inzisionen ein Sichtsystem, bspw. ein Endoskop, und ein oder mehrere Instrumente, wie Zangen, Scheren, HF-Instrumente, Klemmenapplikatoren, usw., in den Körper eingebracht. Mit den vorgenannten Instrumenten wird in Kombination mit peripheren Geräten die minimal-invasive chirurgische Operation videogestützt durchgeführt.

Derzeit wird die minimal-invasive Chirurgie bspw. zur Entfernung der Gallenblase, des Blinddarms und zur Behandlung von Bruchoperationen eingesetzt. Weitere Einsatzgebiete werden erschlossen.

Unter "minimal-invasiver" Chirurgie sind jedoch nicht nur operative Eingriffe, sondern auch andere Eingriffe wie bspw. das Einbringen von Substanzen in den Körper oder Biopsien unter Verwendung der minimal-invasiven Technik zu verstehen.

Der Vorteil der minimal-invasiven Technik liegt gegenüber offenen Eingriffen in der patientenschonenden Behandlungsweise, die ein geringeres operatives Trauma, kürzere Aufenthaltszeiten in Krankenhäusern und eine kürzere Berufsunfähigkeit nach sich zieht.

Gegenüber der offenen Chirurgie ist jedoch die Handhabung des Instrumentariums während eines operativen Eingriffs wesentlich komplizierter, zum einen weil die Bewegungsfreiheit des durch die Inzision eingeführten Instruments aufgrund der nur kleinen Inzision beschränkt ist, und zum anderen weil der operierende Arzt keine räumliche Sicht auf die im Körper befindliche Arbeitsspitze des Instruments und das Operationsgebiet selbst hat, sondern lediglich eine zweidimensionale Sichtkontrolle über den Videomonitor möglich ist. Es versteht sich, daß die Koordination der Führung und Bedienung des oder der Instrumente dadurch erschwert ist.

Es besteht daher ein erhöhter Schulungsbedarf in den neuen Techniken der minimal-invasiven Chirurgie. Für die Schulungen von Operationstechniken der minimal-invasiven Chirurgie gibt es derzeit verschiedene Alternativen.

Eine Alternative besteht darin, an Tieren, speziell an Schweinen, Trainingsoperationen in vivo durchzuführen. Eine solche Schulung ist jedoch kostenintensiv, zeitaufwendig in der Vorbereitung und darüber hinaus ethisch bedenklich.

Bei einer weiteren Alternative wird ein Training von Ärzten an in vitro-Organen in einer Trainingsbox durchgeführt, in die die Instrumente entsprechend eingeführt werden können. Die in der Trainingsbox angeordneten Organe sind zwar biologische Organe, jedoch ist die Schulung bei dieser Alternative ebenfalls zeitaufwendig in der Vorbereitung und kann nicht als realistisch angesehen werden.

Schließlich wird derzeit eine Schulung der minimal-invasiven Chirurgie an Organmodellen bzw. Trainingsobjekten in einer Trainingsbox durchgeführt. Für das Training einer gesamten Operation sind derartige Organmodelle jedoch nicht ausreichend realistisch. Darüber hinaus ist ein nicht unerheblicher Vorbereitungsaufwand zur Präparation der Organmodelle und Trainingsobjekte notwendig, da die Modelle während der Operation meist zerstört werden und für eine erneute Schulung zunächst wieder präpariert werden müssen.

Aufgrund der Nachteile der bislang verwendeten Schulungssysteme bestand sehr früh bereits ein Bedarf an sogenannten virtuellen Simulatoren, mit denen die Nachteile der bisherigen Schulungssysteme überwunden werden können.

Bei der virtuellen Simulation wird das eigentliche Operationsfeld ausschließlich über einen Rechner generiert. Für eine realistische Simulation wird eine Modelldatenbasis benötigt, die die geometrischen Formen und physikalischen Eigenschaften der Gewebe, Organe und Gefäße sowie die Geometrie und Kinematik des oder der Instrumente festlegt. In der Zeitschrift "Biomedical Journal", Band Nr. 51, April 1998, wird von U. Kühnapfel ein "Virtual-Reality-Trainingssystem für die Laparoskopie" beschrieben, das eine Eingabebox aufweist, die äußerlich die gewohnten Instrumentengriffe sowie ein virtuelles Endoskop zeigt. Im Gehäuse werden die minimal-invasiven Instrumente in einem mechanischen Führungssystem geführt, das weiterhin die Erfassung der Auslenkung der Instrumente und Effektoren erlaubt. Zusätzlich sind verschiedene Fußschalter vorhanden, über die sich chirurgische und allgemeine Funktionen aktivieren lassen. Eine Sensordatenerfassung, z.B. über Winkelencoder, auf PC-Basis mißt die Gelenkstellungen der Bedieninstrumente und übermittelt diese kontinuierlich an eine Grafikworkstation. Daraus wird in Echtzeit ein "virtuelles" Bild der Endoskopsicht berechnet. Die Konsistenz des zu behandelnden Gewebes wird realitätsnah durch inhärent berechnete "virtuelle" Reaktionskräfte zwischen Organen und Instrumenten als Kraftrückwirkung auf den Bediener zurückgeführt.

Bei der virtuellen Simulation von minimal-invasiven Eingriffen werden demnach keine körperlich vorhandenen Organe verwendet, sondern die räumlichen und physiologischen Strukturen solcher Organe liegen als Daten in einem Rechner vor. Die eingangs genannte Simulatorvorrichtung bildet dabei die Schnittstelle zwischen der Bedienungsperson und dem zu handhabenden Instrument und dem Simulationsrechnersystem. Die zu schulende Bedienungsperson handhabt das in der mechatronischen Simulatorvorrichtung aufgenommene Instrument, wobei die im Rechner hinterlegten Daten der räumlichen und physiologischen Struktur des virtuellen Organs bei der Handhabung des Instruments als Kraftrückwirkung von der Simulatorvorrichtung auf das Instrument übertragen werden, wodurch der Bedienungsperson eine realistische Haptik vermittelt wird.

Die bisherigen Entwicklungen auf diesem Gebiet konzentrierten sich primär auf die Erstellung der Simulations-Software, während als mechatronische Simulatorvorrichtung bis dahin verfügbare Halterungssysteme mit Lokalisationsmöglichkeit eingesetzt wurden. Für eine realitätsnahe Simulation sollte die Simulatorvorrichtung alle vorkommenden Freiheitsgrade eines minimal-invasiven chirurgischen Instruments, nämlich eine Verkippung des Instruments um die Körperoberfläche, eine Bewegung in Schaftrichtung und eine Drehbewegung um die Längsachse des Schafts, berücksichtigen. Problematisch dabei ist jedoch die mechanische Umsetzung dieser vielen Freiheitsgrade in der Halteeinrichtung der Simulatorvorrichtung für das Instrument.

Beispielsweise die aus der US 6,024,576 bekannte Simulatorvorrichtung besteht aus einem komplizierten mechanischen Hebelsystem, dessen Nachteil insbesondere darin besteht, daß die Simulatorvorrichtung insgesamt sehr groß baut. Mit einer solchen Simulatorvorrichtung ist es daher nicht möglich, mit zwei oder mehr Vorrichtungen mehrere Instrumente so nahe zusammenzubringen, daß sich die Instrumentenspitzen berühren können. Aufgrund der in dieser bekannten Simulatorvorrichtung verwendeten vielen Hebel treten bei der Benutzung dieser Simulatorvorrichtung störende Trägheits- und Drehmomente auf, die in aufwendiger Weise kompensiert werden müssen, um eine realitätsnahe Kraftrückwirkung zu ermöglichen.

Die aus der eingangs genannten EP-A-0 970 662 bekannte Simulatorvorrichtung wird in einem chirurgischen Simulationssystem verwendet, das das Legen eines Katheters in Blutgefäße simuliert. Dieses bekannte Simulationssystem sorgt für eine haptische Kraftrückwirkung auf den Benutzer eines Satzes von Kathetern oder ähnlichen rohrförmigen Gegenständen, die an das System angekoppelt sind. Eine Aktuator-Anordnung ist an die Gegenstände und ebenso an eine Rechnerstation gekoppelt, die ein chirurgisches Verfahren anhand eines Simulationsprogrammes durchführt. Die Aktuator-Anordnung weist einen Satz von voneinander beabstandeten Aktuatoren auf, wobei jeder Aktuator mechanisch an einen entsprechenden Gegenstand durch ein starres Rohr gekoppelt ist, das als Verlängerung des Gegenstandes innerhalb der Aktuator-Anordnung verwendet wird. Jeder Aktuator der Anordnung umfaßt Sensoren, die Signale erzeugen, die eine axiale Translationsbewegung und eine Rotationsbewegung des Gegenstandes durch den Benutzer anzeigen. Die erfaßten Signale werden an den Rechner übertragen. Der Rechner berechnet als Antwort auf diese Signale axiale Kräfte und Drehmomente, die auf den Gegenstand als haptische Kraftrückwirkung ausgeübt werden müssen und erzeugt Antriebssignale für die Aktuator-Anordnung. Jeder der Aktuatoren weist eine Getriebeanordnung auf, die über Stative und Halter mit dem starren Rohr bzw. dem zu simulierenden Katheter in Verbindung steht. Die Ausgestaltung dieser Getriebeanordnung führt jedoch nachteiligerweise zu einem erhöhten Trägheitsmoment des Aktuators selbst. Dies hat den Nachteil, daß der Benutzer der Simulatorvorrichtung bereits aufgrund der hohen Trägheitsmomente des Aktuators eine Kraftrückwirkung verspürt, auch wenn diese im Sinne der zu simulierenden Bewegung des Katheters normalerweise nicht auftritt. Auch sind die bekannten Aktuatoren hinsichtlich ihrer Baugröße sehr groß bauend.

Weiterhin ist aus dem Dokument WO 97/19440 eine Simulatorvorrichtung als Schnittstelle zwischen der Bewegung eines chirurgischen Instrumentes und einem Computersystem bekannt. Ein kardanischer Mechanismus ist mit dem Instrument gekoppelt, wobei der kardanische Mechanismus zumindest zwei Bewegungsfreiheitsgrade besitzt. Der kardanische Mechanismus weist vorzugsweise mehrere Elemente auf, die die von dem Instrument ausgehenden Bewegungen mittels eines mechanischen Hebelmechanismus auf Sensoren bzw. entgegenwirkende Aktoren übertragen.

Ferner ist aus der WO 96/30885 ein virtuelles Chirurgie-System bekannt, das als Eingabevorrichtung eine Maus, einen Joystick, eine dreidimensionale Maus oder einen sieben-dimensionalen Joystick verwendet. Bei dieser Art einer Simulationsvorrichtung besteht der Nachteil darin, daß die Eingabevorrichtung, d.h. die Maus oder der Joystick, keine naturgetreue Simulation der Benutzung eines chirurgischen Instruments, beispielsweise einer Zange, ermöglicht.

Der Erfindung liegt daher die Aufgabe zugrunde, eine Simulatorvorrichtung der eingangs genannten Art anzugeben, die eine kompakte Bauform und eine momentenarme Mechanik aufweist.

Erfindungsgemäß wird diese Aufgabe bei der Simulatorvorrichtung der eingangs genannten Art dadurch gelöst, daß die Getriebeanordnung ein mit dem Schaft in Verbindung stehendes und mit diesem um dessen Längsachse mitdrehendes erstes Kegelrad und ein zweites und ein drittes Kegelrad aufweist, die beidseits des ersten Kegelrads angeordnet sind und mit diesem wälzend in Eingriff stehen.

Die erfindungsgemäße Simulatorvorrichtung weist demnach eine differentialgetriebeähnliche Getriebeanordnung auf, die den Vorteil hat, daß sie um den Schaft des Instruments herum angeordnet werden kann und besonders klein baut, insbesondere werden große Bewegungsradien der sich bewegenden Teile wie bei den bekannten Hebelanordnungen vermieden. Dadurch wird auch eine besonders momentenarme Führung des Instruments in der Halteeinrichtung erreicht. Mit einer derartigen Getriebeanordnung läßt sich sowohl der erste Freiheitsgrad der Drehbewegung um die Längsachse des Schafts als auch der zweite Freiheitsgrad der translatorischen Bewegung in der Richtung des Schafts mit einer Kraftrückwirkung realisieren, wie in einer bevorzugten Ausgestaltung zusätzlich vorgesehen ist, und auch eine Überlagerung aus beiden Bewegungen wird durch die erfindungsgemäß vorgesehene Getriebeanordnung momentenarm ermöglicht. Des weiteren hat die Getriebeanordnung mit drei Kegelrädern den Vorteil, daß die für eine Kraftrückwirkung eventuell vorhandenen Aktuatoren, bspw. Elektromotoren, in der Simulatorvorrichtung unbeweglich angeordnet werden können, wodurch weitere Trägheits- bzw. Drehmomente und ein erhöhter Raumbedarf einer Bewegung solcher Motoren vermieden wird.

In einer bevorzugten Ausgestaltung steht das erste Kegelrad über ein oder mehrere Ritzel mit einer am Schaft ausgebildeten Zahnung mit dem Schaft wälzend in Eingriff.

Durch diese Maßnahme wird eine besonders momentenarme Übertragung einer translatorischen Bewegung des Schafts entlang seiner Längsachse auf das erste Kegelrad bewirkt. Bei einer solchen Längsbewegung des Schafts wird das erste Kegelrad in eine Drehung um seine Längsachse versetzt und dieses versetzt damit das zweite und das dritte Kegelrad in zueinander gegensinnige Drehbewegungen. Eine Kraftrückwirkung auf den ersten Freiheitsgrad kann somit besonders einfach dadurch realisiert werden, daß das zweite und dritte Kegelrad, die durch einen oder mehrere Aktuatoren gehemmt werden, wie in einer weiteren bevorzugten Ausgestaltung vorgesehen ist. Um eine Kraftrückwirkung auf den Freiheitsgrad der translatorischen Bewegung zu erreichen, werden dann das zweite und das dritte Kegelrad gegensinnig mit dem gleichen Moment und der gleichen Drehzahl angetrieben.

Mit denselben Aktuatoren kann jedoch auch eine Kraftrückwirkung auf den Freiheitsgrad der Drehbewegung des Schafts um seine Längsachse erreicht werden. Beim Drehen des Instruments um seine Längsachse wird, wie bereits erwähnt, nämlich auch das erste Kegelrad um die Längsachse des Schafts mitgedreht, und dieses versetzt dabei das zweite und das dritte Kegelrad in gleichsinnige Drehbewegungen. Um eine Kraftrückwirkung auf den Freiheitsgrad der Drehbewegung des Schafts um seine Längsachse zu erzielen, müssen die Aktuatoren demnach das zweite und das dritte Kegelrad gleichsinnig mit gleichem Moment hemmen.

In einer weiteren bevorzugten Ausgestaltung sind das zweite und das dritte Kegelrad konzentrisch zum Schaft angeordnet.

Durch diese Anordnung des zweiten und dritten Kegelrades ergibt sich eine besonders platzsparende, kleinbauende Bauweise der Getriebeanordnung und der Gesamtanordnung aus Schaft und Getriebeanordnung.

In einer weiteren bevorzugten Ausgestaltung weist die Halteeinrichtung weiterhin eine kardanische Aufhängung auf, so daß das Instrument einen dritten Freiheitsgrad einer Schwenkbewegung um eine erste Schwenkachse und einen vierten Freiheitsgrad einer Schwenkbewegung um eine senkrecht zur ersten Schwenkachse verlaufenden zweiten Schwenkachse besitzt.

Bei einer realen Operation läßt sich ein Operationsinstrument gewöhnlich um die Ebene der Körperoberfläche um zwei zueinander senkrecht stehende Achsen, die sich in der Inzision schneiden, verschwenken. Mit der zuvor genannten Ausgestaltung ermöglicht somit die erfindungsgemäße Simulatorvorrichtung auch eine realitätsnahe Simulation solcher Bewegungen eines Instruments. Die erfindungsgemäße Simulatorvorrichtung ermöglicht somit zumindest vier Bewegungsfreiheitsgrade für das Instrument. Eine kardanische Aufhängung hat des weiteren den Vorteil einer kompakten, wenig platzergreifenden Bauweise, so daß diese Maßnahme im Sinne der der Erfindung zugrundeliegenden Aufgabe einen weiteren Beitrag zur Lösung dieser Aufgabe darstellt.

In einer weiteren bevorzugten Ausgestaltung ist die kardanische Aufhängung durch ein bügelförmiges Element, das um die erste Schwenkachse verschwenkbar ist, und ein ringförmiges, um die zweite Schwenkachse verschwenkbares Element gebildet, wobei das Instrument am bügelförmigen Element geführt ist.

Mit dieser Ausgestaltung wird eine konstruktiv besonders einfache kardanische Aufhängung realisiert, die den weiteren Vorteil hat, daß die erfindungsgemäß vorgesehene Getriebeanordnung für den ersten und den zweiten Freiheitsgrad platzsparend in der Anordnung aus dem bügelförmigen Element und dem ringförmigen Element angeordnet werden kann. Diese Anordnung ermöglicht es außerdem, daß im Falle, daß diese beiden Freiheitsgrade mit einer Kraftrückwirkung versehen sind, die entsprechenden Aktuatoren wiederum nicht mit bewegt werden müssen.

In einer weiteren bevorzugten Ausgestaltung sind an dem ringförmigen Element zwei bezüglich der zweiten Schwenkachse um etwa 90° versetzt angeordnete, aneinander gegenüberliegende Aufnahmen für ein kugelförmiges Element befestigt, durch das der Schaft hindurchgeführt ist, wobei das kugelförmige Element in den Aufnahmen um eine durch beide Aufnahmen hindurchgehende Drehachse relativ zu den Aufnahmen drehbar, senkrecht zu dieser Drehachse unbeweglich bezüglich der Aufnahme gehalten ist.

Durch diese Maßnahme, bei der die kardanische Aufhängung ein kugelförmiges Element zur Aufnahme des Instruments aufweist, wird der Vorteil geschaffen, daß das kugelförmige Element eine besonders platzsparende mechanische Verbindung zwischen dem Instrument und dem die kardanische Aufhängung bildenden bügelförmigen Element und dem ringförmigen Element bildet. Des weiteren läßt sich der Innenraum des kugelförmigen Elements besonders gut zur Aufnahme der erfindungsgemäß vorgesehenen Getriebeanordnung samt deren Aktuatoren für die Kraftrückwirkung nutzen.

Dementsprechend ist in einer weiteren bevorzugten Maßnahme vorgesehen, daß die Getriebeanordnung in dem kugelförmigen Element angeordnet ist, wodurch eine besonders platzsparende Bauweise der gesamten Simulatorvorrichtung trotz der zumindest vier möglichen Freiheitsgrade der Bewegung des Instruments erreicht wird.

In einer weiteren bevorzugten Ausgestaltung ist für die Kraftwirkung auf den dritten und vierten Freiheitsgrad jeweils zumindest ein Aktuator vorgesehen.

Durch diese Maßnahme können auch der dritte und der vierte Freiheitsgrad realitätsnah mit Kraftrückwirkungen, wie sie bei einer realen Handhabung des Instruments bei einer Operation auftreten, simuliert werden. Auch hinsichtlich der für die Kraftrückwirkung auf den dritten und vierten Freiheitsgrad vorgesehenen Motoren gilt wiederum, daß diese Motoren bei der Bewegung des Instruments in der Simulatorvorrichtung nicht mitbewegt werden müssen, was durch die kardanische Aufhängung ermöglicht wird.

In einer weiteren bevorzugten Ausgestaltung ist zur Lagebestimmung des Instruments für zumindest einen Freiheitsgrad, vorzugsweise für alle Freiheitsgrade, jeweils ein Lageerfassungssensor vorgesehen.

Mit solchen Lageerfassungssensoren können die Momentanwerte aller Freiheitsgrade des Instruments, die durch die erfindungsgemäße Simulatorvorrichtung ermöglicht werden, in Echtzeit erfaßt und durch entsprechende Signalverarbeitung in einem Rechner wiederum in Echtzeit für die Erzeugung von Signalen für die Kraftrückwirkung verwendet werden.

In einer weiteren bevorzugten Ausgestaltung weist das Instrument eine bewegliche Handhabe auf, und ist die bewegliche Handhabe mit einer Kraftrückwirkung ausgestattet.

Diese Maßnahme hat insbesondere dann, wenn das Instrument kein Endoskop, sondern ein Operationsinstrument wie eine Zange oder Schere ist, den Vorteil, daß auch die beim realen Präparieren, bspw. Schneiden oder Fassen, von Gewebe auftretenden Kraftwiderstände durch die erfindungsgemäße Simulatorvorrichtung simuliert werden können. Im einfachsten Fall kann an der beweglichen Handhabe ein Bowdenzug angebracht werden, der mit einem Aktuator in Verbindung steht, der wiederum Steuersignale von dem Simulations-Rechnersystem erhält. Mit der zuvor genannten Ausgestaltung weist die erfindungsgemäße Simulatorvorrichtung sogar fünf Freiheitsgrade für die Simulation auf.

In einer bevorzugten Verwendung der Simulatorvorrichtung wird diese zur Simulation eines minimal-invasiven Eingriffs am menschlichen oder tierischen Körper verwendet.

Weitere Merkmale und Vorteile ergeben sich aus der nachfolgenden Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine perspektivische Gesamtdarstellung einer mechatronischen Simulatorvorrichtung zum Simulieren zumindest zweier Bewegungsfreiheitsgrade eines Instruments mit Kraftrückwirkung;
- Fig. 2: die Simulatorvorrichtung in Fig. 1 in einer gegenüber Fig. 1 veränderten Betriebsstellung;
- Fig. 3: die Simulatorvorrichtung in Fig. 1 und 2 in einer weiteren gegenüber Fig. 1 und 2 veränderten Betriebssstellung;
- Fig. 4: eine Seitenansicht der Simulatorvorrichtung in Fig. 1 bis 3 mit teilweisen Weglassungen und teilweise im Schnitt;
- Fig. 5: eine weitere Seitenansicht der Simulatorvorrichtung in Fig. 1 bis 4, wobei die Seitenansicht gegenüber Fig. 4 um etwa 90° gedreht ist;
- Fig. 6: eine in der Simulatorvorrichtung in Fig. 1 bis 5 vorhandene Getriebeanordnung in perspektivischer Darstellung in vergrößertem Maßstab;
- Fig. 7: einen Ausschnitt der Simulatorvorrichtung in Fig. 1 bis 5 in einem Längsschnitt in einem vergrößerten Maßstab; und
- Fig. 8: einen Schnitt entlang der Linie VIII-VIII in Fig. 7.

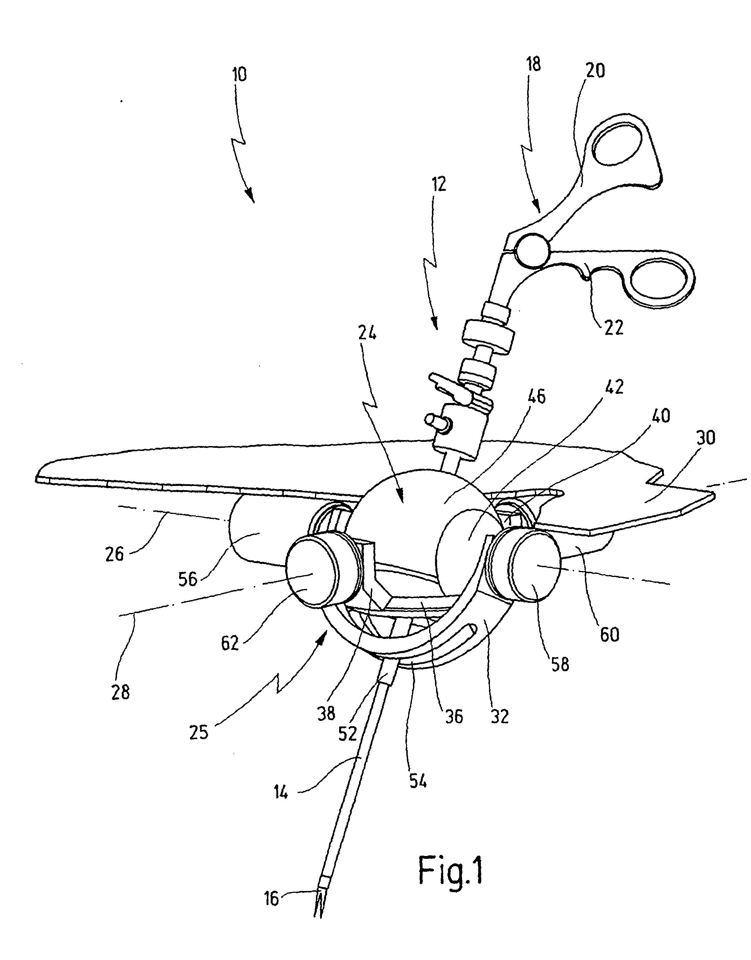

In Fig. 1 bis 5 ist eine mit dem allgemeinen Bezugszeichen 10 versehene Simulatorvorrichtung zum Simulieren zumindest zweier Bewegungsfreiheitsgrade eines Instruments 12 dargestellt.

Die Simulatorvorrichtung 10 wird insbesondere zur Simulation von minimal-invasiven chirurgischen Eingriffen am menschlichen oder tierischen Körper für die Schulung von Ärzten verwendet.

In dem gezeigten Ausführungsbeispiel ist das Instrument 12 eine Präparierzange zum Schneiden von Gewebe. Anstelle einer solchen Präparierzange kann als Instrument 12 jedoch auch ein Endoskop in die Simulatorvorrichtung 10 eingesetzt werden, oder es können andere Arbeitsinstrumente wie Klemmenapplikatoren, Saug- und Spülinstrumente und dgl. in die Simulatorvorrichtung 10 eingesetzt werden. Das Instrument 12 ist für einen Instrumentenwechsel aus der Simulatorvorrichtung herausnehmbar.

Das Instrument 12 weist allgemein einen länglichen Schaft 14 auf, der durch die Simulatorvorrichtung 10 hindurchgeführt ist bzw. in dieser aufgenommen ist, ein Werkzeug 16 am distalen Ende des Schafts, das im vorliegenden Ausführungsbeispiel zwei bspw. mit Schneiden versehene Maulteile aufweist, und eine Handhabe 18 am proximalen Ende des Schafts 14 auf. Die Handhabe 18 weist ein bewegliches Griffteil 20 sowie ein unbewegliches Griffteil 22 auf.

Die Simulatorvorrichtung 10 weist eine Halteeinrichtung 24 auf, die nachfolgend näher beschrieben wird.

Die Halteeinrichtung 24 weist eine kardanische Aufhängung 25 auf. Die kardanische Aufhängung 25 ermöglicht die Simulation eines Freiheitsgrades einer Schwenkbewegung des Instruments 12 um eine erste Schwenkachse 26 sowie eines weiteren Freiheitsgrades einer Schwenkbewegung des Instruments 12 um eine zweite, senkrecht zur ersten Schwenkachse 26 verlaufenden Schwenkachse 28. Mit diesen beiden Freiheitsgraden lassen sich beliebige Kippstellungen des Instruments 12 bezüglich einer Fläche 30, die im Fall einer Verwendung der Simulatorvorrichtung 10 zur Simulation von minimal-invasiven Eingriffen am menschlichen oder tierischen Körper die Körperoberfläche eines Patienten simuliert. Der Schnittpunkt zwischen den Schwenkachsen 26 und 28, der auf einem Punkt auf der Längsachse des Schafts 14 liegt, stellt den invarianten Punkt der Schwenkbewegungen des Instruments 12 dar. Da bei einer realen minimal-invasiven Chirurgie das Instrument durch eine Inzision in der Körperoberfläche hindurchgeführt wird, und der invariante Punkt etwa in der Inzision liegt, ist die Anordnung der Schwenkachsen 26 und 28 bei der Simulatorvorrichtung 10 so getroffen, daß der Schnittpunkt etwa auf Höhe der Fläche 30 bzw. geringfügig darunter liegt.

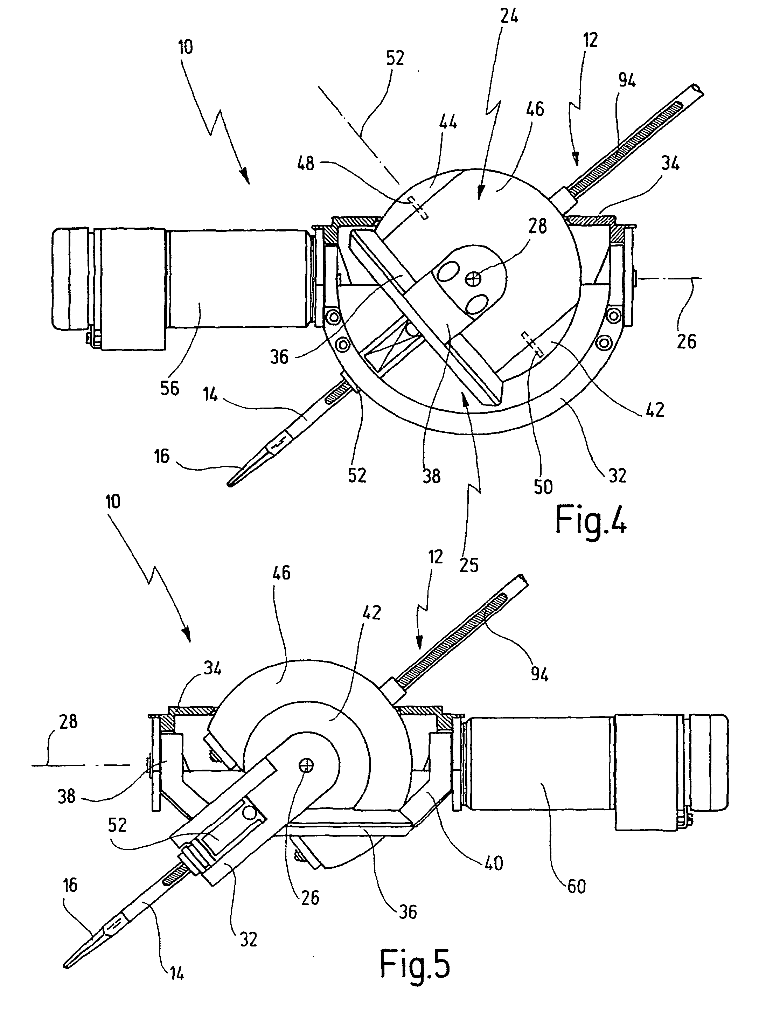

Zur Realisierung der Schwenkachse 26 der kardanischen Aufhängung 25 weist die kardanische Aufhängung 25 ein bügelförmiges Element 32 auf, das etwa halbkreisförmig ausgebildet ist. Das bügelförmige Element 32 ist an einem Montagerahmen 34 (Fig. 4 und 5), der selbst unbeweglich ist, um die Schwenkachse 26 verschwenkbar gelagert.

Die kardanische Aufhängung 25 weist zur Realisierung der Schwenkachse 28 ein ringförmiges Element 36 auf, das innerhalb des bügelförmigen Elements 32 angeordnet ist. Das ringförmige Element 36 ist um die zweite Schwenkachse 28 mittels Montagewinkeln 38 und 40 aufgehängt.

An dem ringförmigen Element 36 sind ferner zwei bezüglich der zweiten Schwenkachse 28 um etwa 90° versetzt angeordnete, einander gegenüberliegende Aufnahmen 42 und 44 befestigt. Die Aufnahmen 42 und 44 sind als Kugelschalensegmente ausgebildet und nehmen ein kugelförmiges Element 46 auf.

Der Schaft 14 des Instruments 12 ist in dem kugelförmigen Element 46 aufgenommen bzw. geht durch dieses hindurch, wie später noch näher beschrieben wird.

Das kugelförmige Element 46 ist in den Aufnahmen 42 und 44 mittels zweier Stifte 46 und 48 (mit unterbrochenen Linien angedeutet), die in entsprechende Bohrungen in dem kugelförmigen Element 46 eingreifen, gelagert. Das kugelförmige Element 46 ist somit um eine durch die Stifte 48 und 50 definierte Drehachse 52 relativ zu den Aufnahmen 42 und 44 drehbar, senkrecht zu dieser Drehachse 52 jedoch bezüglich der Aufnahmen 42 und 44 unbeweglich. Insgesamt ist das kugelförmige Element 46 relativ zu dem bügelförmigen Element 32 und auch zu dem ringförmigen Element 36 beweglich.

Der Schaft des Instruments 14 ist lediglich in dem bügelförmigen Element 32, nicht jedoch in dem ringförmigen Element 36 geführt. Der Schaft 14 ist dazu über eine Hülse 52, die durch ein in dem bügelförmigen Element 32 ausgebildetes Langloch 54 ragt, in dem bügelförmigen Element 32 geführt. Der Schaft 14 kann sich zusammen mit der Hülse 52 in Längsrichtung des Langloches 54 bewegen, wenn das Instrument 12 um die zweite Schwenkachse 28 verschwenkt wird.

Sowohl der Freiheitsgrad der Schwenkbewegung um die erste Schwenkachse 26 als auch der Freiheitsgrad der Schwenkbewegung um die zweite Schwenkachse 28 sind jeweils mit einer Kraftrückwirkung versehen.

Dazu ist für das bügelförmige Element 32, das um die erste Schwenkachse 26 verschwenkbar ist, ein Aktuator, bspw. ein Gleichstrommotor zur Kraftrückwirkung auf das bügelförmige Element 32 angeordnet. Zur Lageerfassung, d.h. zur Winkelbestimmung der Winkellage des bügelförmigen Elements 32 ist dem Aktuator 52 gegenüberliegend ein Lageerfassungssensor 58, bspw. in Form eines Potentiometers oder eines inkrementalen Drehwinkelgebers, angeordnet.

Entsprechend ist als Kraftrückwirkung für den Freiheitsgrad der Schwenkbewegung um die zweite Schwenkachse 28 mit dem ringförmigen Element 36 über den Montagewinkel 40 ein weiterer Aktuator 60 sowie über den Montagewinkel 38 ein Lageerfassungssensor 62 verbunden.

Die Funktionsweise der kardanischen Aufhängung 25 ohne und mit Kraftrückwirkung ist demnach wie folgt. Eine Bedienungsperson, bspw. ein zu schulender Arzt, ergreift mit einer Hand die Handhabe 18 des Instruments 12. Durch Bewegen der Handhabe 18 läßt sich das Instrument 12 nun um den durch den Schnittpunkt der ersten Schwenkachse 26 mit der zweiten Schwenkachse 28 gebildeten invarianten Punkt um die Ebene 30 in beliebigen Raumwinkelrichtungen verkippen. Beispielhaft ist dies in Fig. 1 bis 3 anhand verschiedener Kippstellungen dargestellt.

Aus der Kippstellung in Fig. 1 wurde das Instrument 12 um die zweite Schwenkachse 28 verkippt, während die Schwenkstellung bezüglich der ersten Schwenkachse 26 unverändert geblieben ist. Bei dieser Bewegung hat sich das ringförmige Element 36 entsprechend um die zweite Schwenkachse 28 verkippt, während das kugelförmige Element 46 seine Lage zu dem bügelförmigen Element 32 verändert hat, nicht jedoch zu dem ringförmigen Element 36. Die Hülse 52 mit dem Schaft 14 hat sich entsprechend in dem Langloch 54 des bügelförmigen Elements 32 in der Zeichnung nach rechts bewegt.

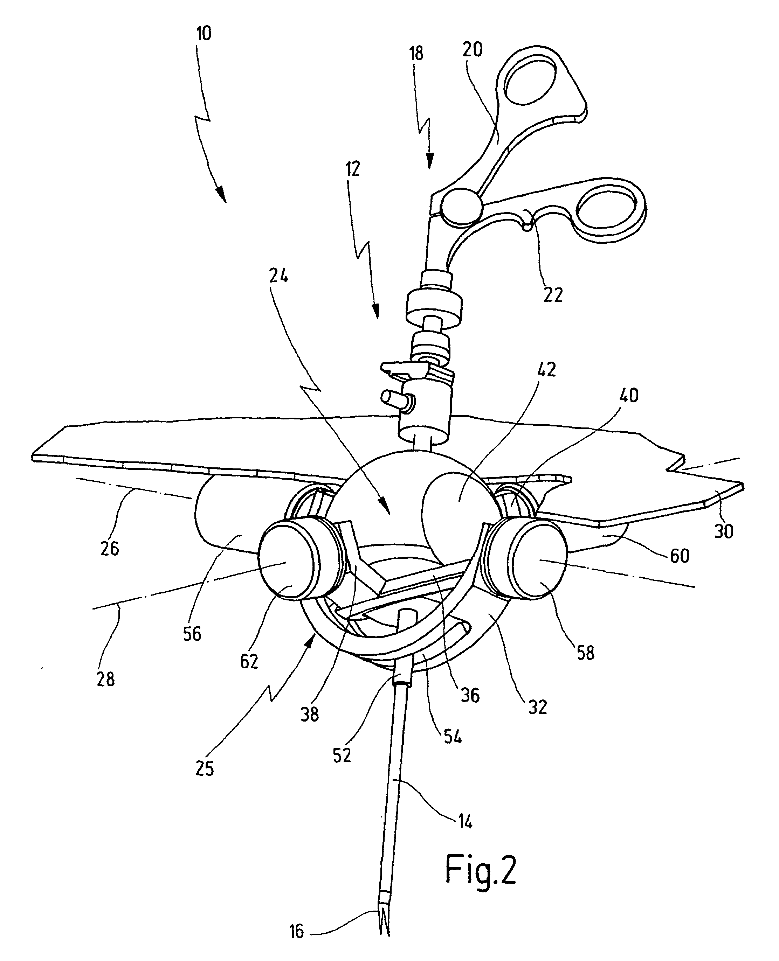

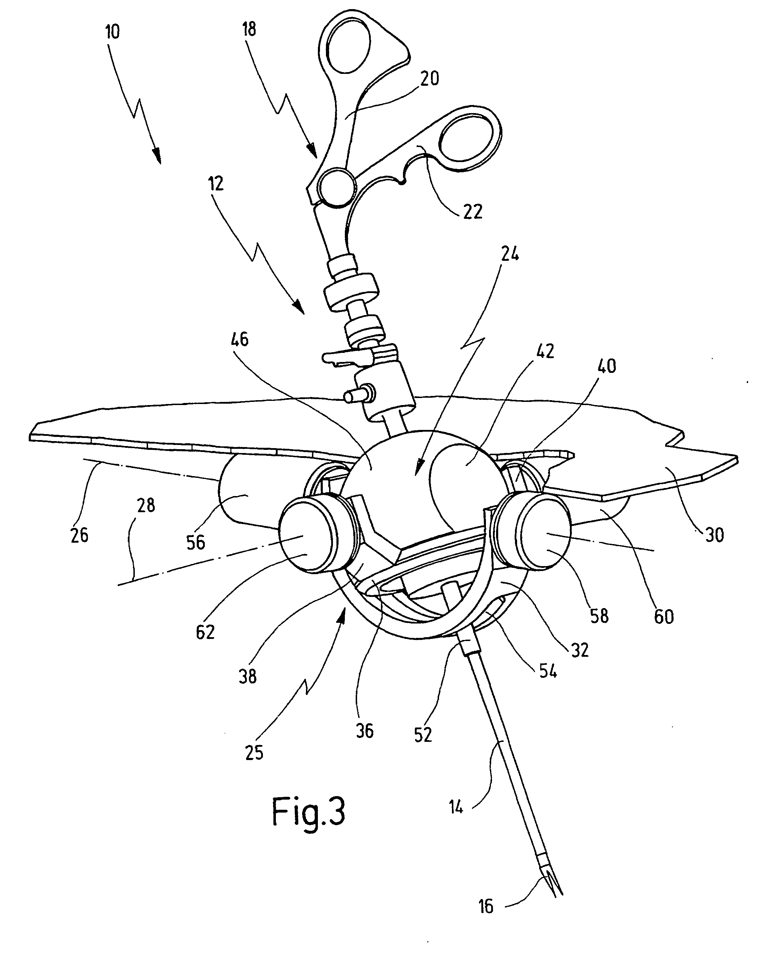

Ausgehend von Fig. 2 wird die in Fig. 3 dargestellte Kippstellung erreicht, indem das Instrument 12 um die erste Schwenkachse 26 in Richtung in die Zeichenebene hinein verschwenkt wurde. Das ringförmige Element 36 hat sich dabei nicht bewegt, jedoch das kugelförmige Element 48 relativ zum ringförmigen Element 36.

Um bei den vorbeschriebenen Bewegungen des Instruments 12 einen Kraftwiderstand zu simulieren, der bspw. durch die Elastizität, Steifigkeit eines simulierten Gewebes bei der Handhabung des Instruments 12 zu überwinden ist, zu simulieren, können den vorgenannten Bewegungen durch eine softwaregestützte rechnergesteuerte Ansteuerung der Aktuatoren 56 und 60 entgegengewirkt werden, so daß der Bediener einen "realen" Kraftwiderstand verspürt, wie wenn er dieselben Vorgänge an einem Patienten durchführt.

Die Lageerfassungssensoren 58 und 62 erfassen ständig in Echtzeit die aktuellen Winkellagen des Instruments 12 um die erste Schwenkachse 26 und zweite Schwenkachse 28, und in Echtzeit werden aufgrund dieser Daten und der im Rechner hinterlegten Gewebedaten die Aktuatoren 56 und 60 für die Kraftrückwirkung angesteuert.

Es versteht sich, daß das Instrument 12 nicht nur nacheinander um die erste Schwenkachse 26 und die zweite Schwenkachse 28 verschwenkt werden kann, sondern auch in beliebigen Raumwinkelrichtungen gleichzeitig um beide Schwenkachsen 26 und 28.

Aus dem Vorstehenden ergibt sich, daß die Aktuatoren 56 und 60 sowie die Lageerfassungssensoren 58 und 62 während der Bewegungen des Instruments 12 und der damit einhergehenden Bewegungen des ringförmigen Elements 36, des bügelförmigen Elements 32 und des kugelförmigen Elements 46 nicht mit bewegt wurden, so daß die Halteeinrichtung 24 sehr momentenarm ist und die kardanische Aufhängung 25 eine sehr kompakte Bauweise zur Realisierung der zuvor genannten Freiheitsgrade darstellt.

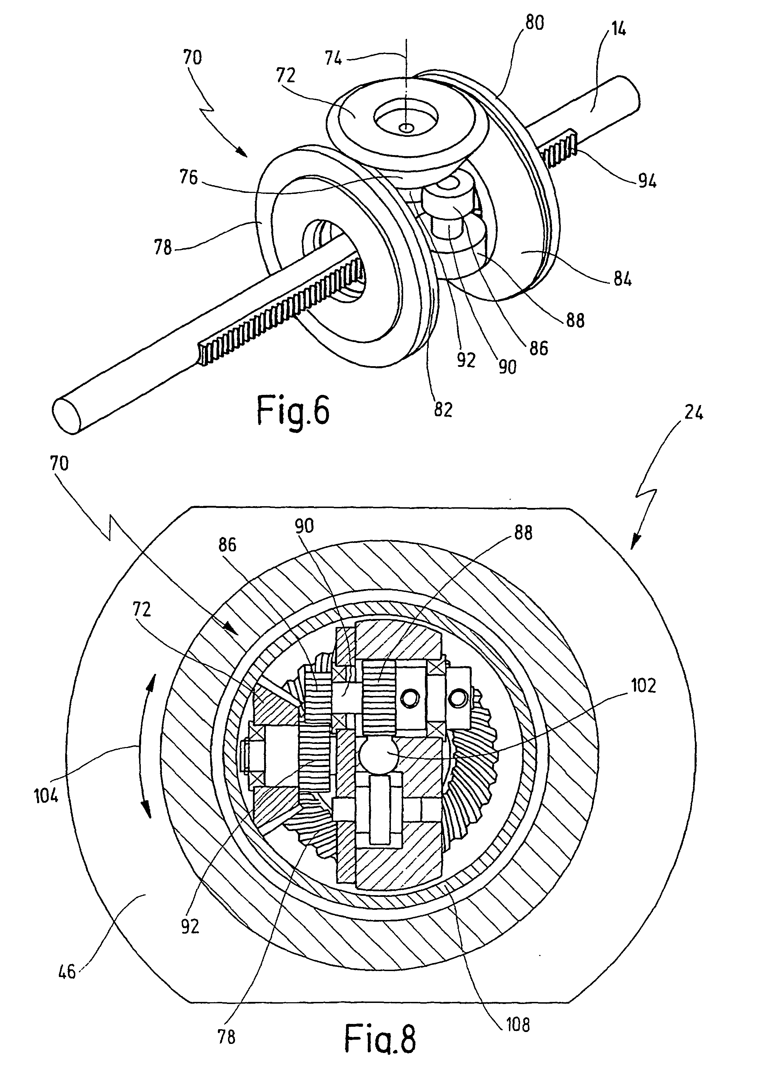

Gemäß einem weiteren Aspekt weist die Simulatorvorrichtung 10 eine Getriebeanordnung 70 auf, die nachfolgend mit Bezug auf Fig. 6 bis 8 näher beschrieben wird.

Die Getriebeanordnung 70 ist Bestandteil der Halteeinrichtung 24 für das Instrument 12, wobei mittels der Getriebeanordnung 70 weitere Bewegungsfreiheitsgrade für das Instrument 12 mit Kraftrückwirkung simuliert werden können. Bei diesen weiteren Freiheitsgraden handelt es sich um einen Freiheitsgrad einer Drehbewegung des Instruments 12 um die Längsachse des Schafts 14 und um einen weiteren Freiheitsgrad einer translatorischen Bewegung des Instruments 12 in Richtung des Schafts 14.

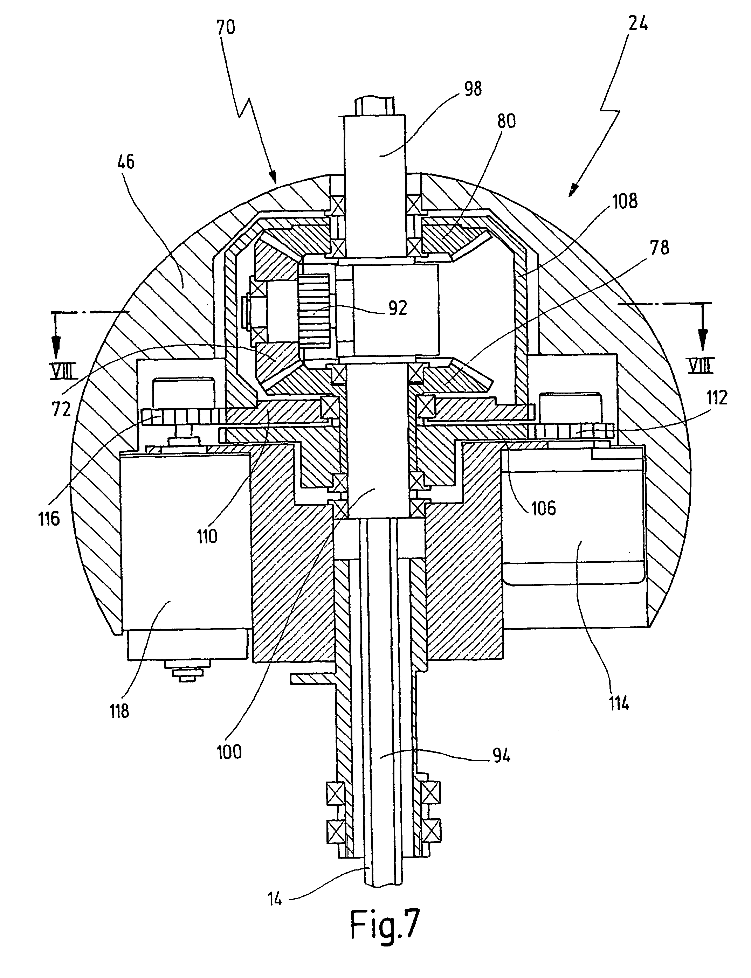

Die zur Simulation dieser beiden vorgenannten Freiheitsgrade mit Kraftrückwirkung vorgesehene Getriebeanordnung 70 ist als Ganzes in dem kugelförmigen Element 46 der kardanischen Aufhängung 25 angeordnet, wie aus Fig. 7 und 8 hervorgeht. In Fig. 6 ist die Getriebeanordnung 70 ohne das kugelförmige Element 46 perspektivisch in vergrößertem Maßstab dargestellt.

Die Getriebeanordnung 70 weist zunächst ein erstes Kegelrad 72 auf. Das erste Kegelrad 72 ist um eine quer zum Schaft 14 verlaufende Drehachse 74 drehbar. Auf einer kegelstumpfförmigen Umfangsfläche 76 weist das erste Kegelrad 72 eine Zahnung auf, die in Fig. 6 nicht dargestellt ist. Anstelle einer Zahnung kann die kegelstumpfförmige Fläche 76 auch als Reibfläche ausgebildet sein.

Die Getriebeanordnung 70 weist ferner ein zweites Kegelrad 78 und ein drittes Kegelrad 80 auf, wobei das zweite Kegelrad 78 und das dritte Kegelrad 80 beidseits des ersten Kegelrades 72 angeordnet sind. Das zweite Kegelrad 78 und das dritte Kegelrad 80 sind um den Schaft 14 des Instruments 12 herum, koaxial mit diesem angeordnet. Die Kegelräder 78 und 80 sind dementsprechend um die Längsachse des Schafts 14 drehbar. Die Drehachsen der Kegelräder 78 und 80 verlaufen senkrecht zur Drehachse des Kegelrades 72.

Das zweite Kegelrad 78 weist eine kegelstumpfförmige Fläche 82, und das dritte Kegelrad 84 weist eine kegelstumpfförmige Fläche 84 auf, wobei die kegelstumpfförmigen Flächen 82 und 84 mit der kegelstumpfförmigen Fläche 76 des ersten Kegelrades 72 wälzend in Eingriff stehen. Entsprechend weisen die kegelstumpfförmigen Flächen 82 und 84 Zahnungen auf oder sind als Reibflächen ausgebildet.

Während das zweite Kegelrad 78 und das dritte Kegelrad 80 nicht mit dem Schaft 14 verbunden sind, ist das erste Kegelrad 72 über eine Ritzelanordnung mit dem Schaft 14 verbunden, die ein erstes Ritzel 86 und ein zweites Ritzel 88 aufweist. Das erste Ritzel 86 ist mit dem zweiten Ritzel 88 über eine Welle 90 drehfest verbunden. Eine Drehachse der Anordnung aus dem ersten Ritzel 86, der Welle 90 und dem zweiten Ritzel 88 verläuft parallel zur Drehachse 74 des ersten Kegelrades 70.

Das erste Kegelrad 72 weist ein Stirnrad 92 auf, das mit dem ersten Ritzel 86 kämmend in Eingriff steht.

Das zweite Ritzel 88 steht demgegenüber mit einer sich entlang des Schafts 14 erstreckenden Zahnung 94 in Eingriff.

Das Stirnrad 92 kann mit dem ersten Kegelrad 72 einstückig ausgebildet oder als separates Teil mit diesem drehfest verbunden sein.

Gemäß Fig. 7 und 8 ist die Getriebeanordnung 70 innerhalb des kugelförmigen Elements 46 in einer Ausnehmung 96 darin angeordnet.

Der Schaft 14 des Instruments 12 ist durch zylindrische Hülsen 98 und 100 durch die Getriebeanordnung 70 durchgeführt. Aufgrund der an dem Schaft 14 vorgesehenen Zahnung 94 weist der Schaft 14 im Querschnitt ein schlüsselartiges Profil auf, wobei die Getriebeanordnung eine entsprechend dazu komplementäre schlüssellochartige Durchführung 102 (Fig. 8) aufweist. Das erste Kegelrad 72 ist in dieser Weise über die Ritzel 86 und 88 drehfest mit dem Schaft 14 verbunden, d.h. bei einer Drehung des Schafts 14 um seine Längsachse wird das erste Kegelrad 72 in dem kugelförmigen Element 48 je nach Drehrichtung des Schafts gemäß einem Doppelpfeil 104 um die Längsachse des Schafts 14 gedreht.

Das zweite Kegelrad 78 ist mit einem Ringflansch 106 drehfest verbunden. Das dritte Kegelrad 80 ist mit einer zylindrisch ausgebildeten Dose 108 drehfest verbunden, die wiederum mit einem weiteren Ringflansch 110 drehfest verbunden ist. Der Ringflansch 106, der mit dem zweiten Kegelrad 78 drehfest verbunden ist, weist an seinem äußeren Umfang eine Zahnung auf, die mit einem Ritzel 112 kämmt, das mit der Abtriebswelle eines Aktuators 114, bspw. einem Gleichstrommotor, mit dessen Abtriebswelle verbunden ist.

Der Ringflansch 110, der über die Dose 108 drehfest mit dem dritten Kegelrad 80 verbunden ist, weist an seinem Außenumfang ebenfalls eine Zahnung auf, die mit einem Ritzel 114 kämmt, das abtriebsseitig mit einem Aktuator 118 verbunden ist.

Die Aktuatoren 114 und 118 dienen als Kraftrückwirkung für den Freiheitsgrad der translatorischen Bewegung in Richtung des Schafts sowie als Kraftrückwirkung für den Freiheitsgrad der Drehbewegung des Instruments 12 um den Schaft 14, wie hiernach noch näher beschrieben wird.

Die Funktionsweise der Getriebeanordnung 70 ist wie folgt, wobei zunächst die Funktionsweise ohne Kraftrückwirkung beschrieben wird.

Wird das Instrument 12 um die Längsachse des Schafts 14 gedreht, dreht der Schaft 14 aufgrund der schlüssellochartigen Verbindung mit der schlüssellochartigen Durchführung 102 die Ritzel 88 und 86 und damit das erste Kegelrad 72 in Drehrichtung des Schafts 14 mit. Das erste Kegelrad 72 ist innerhalb der Dose 108 schwimmend gelagert. Bei dieser Drehung des ersten Kegelrades 72 um die Längsachse des Schafts 14 dreht sich das erste Kegelrad 72 nicht um seine Drehachse 74. Demgegenüber versetzt das sich um die Längsachse des Schafts 14 drehende Kegelrad 72 das zweite Kegelrad 78 und das dritte Kegelrad 80 in eine zueinander gleichsinnige Drehbewegung.

Wird das Instrument 12 entlang der Richtung des Schafts 14 in der Halteeinrichtung 24 verschoben, wird durch die Zahnung 94 das Ritzel 88 und damit das Ritzel 86 in eine Drehung versetzt, die eine entsprechende Drehung des Kegelrades 72 um die Drehachse 74 verursacht, ohne daß sich das Kegelrad 72, wie zuvor beschrieben, um die Längsachse des Schafts 14 dreht. Aufgrund der Drehung des ersten Kegelrades 72 um die Drehachse 74 werden nun das zweite Kegelrad 78 und das dritte Kegelrad 80 in zueinander gegensinnige Drehbewegungen versetzt.

Um nun eine Kraftrückwirkung auf den Freiheitsgrad der Drehung des Instruments 12 um die Längsachse des Schafts 14 herbeizuführen, müssen die Aktuatoren 114 und 118 das zweite Kegelrad 78 und das dritte Kegelrad 80 in gleicher Drehrichtung relativ zueinander mit gleichem Moment hemmen.

Um eine Kraftrückwirkung auf den Freiheitsgrad der translatorischen Bewegung des Instruments 12 in Richtung des Schafts 14 herbeizuführen, müssen die Aktuatoren 118 und 114 wegen der gegensinnigen Drehbewegungen des zweiten Kegelrads 78 relativ zum dritten Kegelrad 80 die Kegelräder 78 und 80 entsprechend gegensinnig hemmen, möglichst mit gleichen Drehmomenten, um somit diesem Freiheitsgrad einen Kraftwiderstand entgegenzusetzen.

Aufgrund der Getriebeanordnung 70 ist es möglich geworden, daß die Aktuatoren 114 und 118 nicht mit bewegt werden müssen. Daraus resultiert eine besonders momentenarme Realisierung auch dieser beiden Freiheitsgrade des Instruments 12 und eine besonders kompakte Bauweise, da an bewegten Teilen nur die Kegelräder 72, 78 und 80 und kleinere Ritzel bewegt werden müssen.

Es versteht sich, daß Bewegungen des Instruments 12 in Richtung des Schafts 14 und Bewegungen des Instruments 12 um die Längsachse des Schafts 14 aneinander überlagert simultan erfolgen können.

Des weiteren sind für die Freiheitsgrade der Drehbewegung um die Längsachse des Schafts 14 und der translatorischen Bewegung in Richtung des Schafts 14 im einzelnen nicht dargestellte Lageerfassungssensoren, bspw. in Form von Winkelencodern, vorgesehen, um eine rechnergestützte Simulation mit entsprechender Software durchführen zu können.

Aus der vorhergehenden Beschreibung geht hervor, daß die Simulatorvorrichtung 10 eine Simulation von vier Bewegungsfreiheitsgraden des Instruments 12 ermöglicht, wobei alle Freiheitsgrade mit einer Kraftrückwirkung versehen sind.

Ein fünfter Freiheitsgrad der Bewegung besteht bei dem Instrument 12 in der Bewegung des beweglichen Griffteils 20. Auch für diesen Bewegungsfreiheitsgrad kann eine Kraftrückwirkung vorgesehen werden, indem bspw. an dem beweglichen Griffteil ein Bowdenzug (nicht dargestellt), der mit einem Aktuator (nicht dargestellt) in Form eines Gleichstrommotors verbunden ist, verbunden wird. Entsprechende Lageerfassungssensoren erfassen die aktuelle Lage des beweglichen Griffteils zur Echtzeit-Berechnung der Kraftrückwirkung.

Aufgrund der kompakten Bauweise der Simulatorvorrichtung 10 ist es möglich, drei derartige Vorrichtungen in unmittelbarer Nähe einzusetzen, wobei eine Simulatorvorrichtung bspw. ein Endoskop und zwei weitere Vorrichtungen jeweils ein Arbeitsinstrument aufnehmen. Die kompakte Bauweise der Simulatorvorrichtung 10 ermöglicht es dabei sogar, daß sich die Instrumentenspitzen einander berühren können, wie dies bei realen chirurgischen Eingriffen der Fall ist.

In nicht dargestellter Weise ist die Simulatorvorrichtung 10 in einer Einheit über eine Meßdatenerfassungs- und Regelkarte mit einer Recheneinheit verbunden. In der Meßdatenerfassungs- und Regelkarte ist in einem Programm die Kinematik zur Positionsbestimmung der Instrumentenspitze, bei dem Instrument 12 des Werkzeugs 16, sowie die inverse Kinematik zur Verteilung der Kraft- und Momentenkomponenten an der Instrumentenspitze sowie die Software für die Regelung abgelegt.

Die zuvor beschriebenen Aktuatoren sind nur beispielhaft zu verstehen, wobei derartige Motoren auch durch Hohlwellenmotoren realisiert werden können. Darüber hinaus können anstelle eines axialen Hohlwellenmotors koaxial mehrere Motoren koaxial auf die Kegelräder 78 und 80 wirken.

## Patentansprüche

1. Simulatorvorrichtung mit zumindest zwei Bewegungsfreiheitsgraden für ein Instrument (12), das einen länglichen Schaft (14) aufweist, mit einer Halteeinrichtung (24) für das Instrument (12), wobei die Halteeinrichtung (24) so ausgebildet ist, daß das Instrument (12) zumindest einen ersten Freiheitsgrad einer Drehbewegung um die Längsachse des Schafts (14) und zumindest einen zweiten Freiheitsgrad einer translatorischen Bewegung in Richtung des Schafts (14) besitzt, wobei die Halteeinrichtung (24) eine Getriebeanordnung (70) für den ersten und zweiten Freiheitsgrad aufweist, **dadurch gekennzeichnet, daß** die Getriebeanordnung ein mit dem Schaft (14) in Verbindung stehendes und mit diesem um dessen Längsachse mitdrehendes erstes Kegelrad (72) und ein zweites und ein drittes Kegelrad (78, 80) aufweist, die beidseits des ersten Kegelrades (72) angeordnet sind und mit diesem wälzend in Eingriff stehen.

2. Simulatorvorrichtung nach Anspruch 1, **dadurch gekennzeichnet, daß** das erste Kegelrad (72) über ein oder mehrere Ritzel (86, 88) mit einer sich längs am Schaft (14) erstreckenden Zahnung (94) mit dem Schaft (14) wälzend in Eingriff steht.

3. Simulatorvorrichtung nach Anspruch 1 oder 2, **dadurch gekennzeichnet, daß** das zweite und das dritte Kegelrad (78, 80) konzentrisch zum Schaft (14) angeordnet sind.

4. Simulatorvorrichtung nach einem der Ansprüche 1 bis 3, **dadurch gekennzeichnet, daß** der erste Freiheitsgrad und der zweite Freiheitsgrad mit einer Kraftrückwirkung versehen sind.

5. Simulatorvorrichtung nach Anspruch 4, **dadurch gekennzeichnet, daß** das zweite und dritte Kegelrad (78, 80) jeweils mit einem oder mehreren Aktuatoren (114, 118) für die Kraftrückwirkung verbunden sind.

6. Simulatorvorrichtung nach einem der Ansprüche 1 bis 5, **dadurch gekennzeichnet, daß** die Halteeinrichtung (24) weiterhin eine kardanische Aufhängung (25) aufweist, so daß das Instrument (12) einen dritten Freiheitsgrad einer Schwenkbewegung um eine erste Schwenkachse (26) und einen vierten Freiheitsgrad einer Schwenkbewegung um eine senkrecht zur ersten Schwenkachse (26) verlaufenden zweiten Schwenkachse (28) besitzt.

7. Simulatorvorrichtung nach Anspruch 6, **dadurch gekennzeichnet, daß** die kardanische Aufhängung (25) durch ein bügelförmiges Element (32), das um die erste Schwenkachse (26) verschwenkbar ist, und ein ringförmiges, um die zweite Schwenkachse (28) verschwenkbares Element (36) gebildet ist, wobei das Instrument (12) am bügelförmigen Element (32) geführt ist.

8. Simulatorvorrichtung nach Anspruch 7, **dadurch gekennzeichnet, daß** an dem ringförmigen Element (36) zwei bezüglich der zweiten Schwenkachse (28) um etwa 90° versetzt angeordnete, einander gegenüberliegende Aufnahmen (42, 44) für ein kugelförmiges Element (46) befestigt sind, durch das der Schaft (14) hindurchgeführt ist, wobei das kugelförmige Element (46) in den Aufnahmen (42, 44) um eine durch beide Aufnahmen hindurchgehende Drehachse (52) relativ zu den Aufnahmen (42, 44) drehbar, senkrecht zu dieser Drehachse (52) unbeweglich bezüglich der Aufnahmen (42, 44) gehalten ist.

9. Simulatorvorrichtung nach Anspruch 8, **dadurch gekennzeichnet, daß** die Getriebeanordnung (70) in dem kugelförmigen Element (46) angeordnet ist.

10. Simulatorvorrichtung nach einem der Ansprüche 6 bis 9, **dadurch gekennzeichnet, daß** der dritte und der vierte Freiheitsgrad mit einer Kraftrückwirkung versehen sind.

11. Simulatorvorrichtung nach Anspruch 10, **dadurch gekennzeichnet, daß** für die Kraftrückwirkung auf den dritten und vierten Freiheitsgrad jeweils zumindest ein Aktuator (56, 60) vorgesehen ist.

12. Simulatorvorrichtung nach einem der Ansprüche 1 bis 11, **dadurch gekennzeichnet, daß** zur Lagebestimmung des Instruments (12) für zumindest einen Freiheitsgrad, vorzugsweise für alle Freiheitsgrade, jeweils ein Lageerfassungssensor (58, 62) vorgesehen ist.

13. Simulatorvorrichtung nach einem der Ansprüche 1 bis 12, **dadurch gekennzeichnet, daß** das Instrument (12) eine bewegliche Handhabe aufweist, und daß die bewegliche Handhabe mit einer Kraftrückwirkung ausgestattet ist.

14. Verwendung einer Simulatorvorrichtung (10) nach einem der Ansprüche 1 bis 13 zur Simulation eines minimal-invasiven Eingriffs am menschlichen oder tierischen Körper.

## Claims

1. A simulator apparatus with at least two degrees of freedom of movement for an instrument (12) which has an elongated shaft (14), comprising a holding device (24) for the instrument (12), the holding device (24) being designed such that the instrument (12) has at least a first degree of freedom of rotary movement about the longitudinal axis of the shaft (14) and at least a second degree of freedom of translatory movement in the direction of the shaft (14), the holding device (24) having a gear arrangement (70) for the first and second degrees of freedom, **characterized in that** the gear arrangement has a first bevel gear (72), which is connected to the shaft (14) and corotates with the latter about the longitudinal axis thereof, and has a second and a third bevel gear (78, 80) which are arranged on either side of the first bevel gear (72) and are in rolling engagement therewith.

2. The simulator apparatus of claim 1, **characterized in that** the first bevel gear (72) is in rolling engagement with the shaft (14) via one or more pinions (86, 88) with the aid of a tooth system (94) extending along the shaft (14).

3. The simulator apparatus of claim 1 or 2, **characterized in that** the second and the third bevel gears (78, 80) are arranged concentrically with the shaft (14).

4. The simulator apparatus of anyone of claims 1 through 3, **characterized in that** the first degree of freedom and the second degree of freedom are provided with force feedback.

5. The simulator apparatus of claim 4, **characterized in that** the second and third bevel gears (78, 80) are connected in each case to one or more actuators (114, 118) for the force feedback.

6. The simulator apparatus of anyone of claims 1 through 5, **characterized in that** the holding device (24) further has a cardanic suspension (25) such that the instrument (12) has a third degree of freedom of a swiveling movement about a first swivel axis (26), and a fourth degree of freedom of a swiveling movement about a second swivel axis (28), running perpendicular to the first swivel axis (26).

7. The simulator apparatus of claim 6, **characterized in that** the cardanic suspension (25) is formed by a bow-shaped element (32) that can be swiveled about the first swivel axis (26), and an annular element (36) that can swivel about the second swivel axis (28), the instrument (12) being guided on the bow-shaped element (32).

8. The simulator apparatus of claim 7, **characterized in that** there are fastened on the annular element (36) two mutually opposite seats (42, 44), arranged offset by approximately 90° with reference to the second swivel axis (28), for a spherical element (46) through which the shaft (14) is passed, the spherical element (46) in the seats (42, 44) being held such that it can rotate relative to the seats (42, 44) about an axis of rotation (52) passing through both seats, and such that it is immobile with reference to the seats (42, 44) perpendicular to this axis of rotation (52).

9. The simulator apparatus of claim 8, **characterized in that** the gear arrangement (70) is arranged in the spherical element (46).

10. The simulator apparatus of anyone of claims 6 through 9, **characterized in that** the third and the fourth degrees of freedom are provided with force feedback.

11. The simulator apparatus of claim 10, **characterized in that** at least one actuator (56, 60) is provided in each case for the force feedback to the third and fourth degrees of freedom.

12. The simulator apparatus of anyone of claims 1 through 11, **characterized in that** in each case one position detection sensor (58, 62) is provided for determining the position of the instrument (12) for at least one degree of freedom, preferably for all degrees of freedom.

13. The simulator apparatus of anyone of claims 1 through 12, **characterized in that** the instrument (12) has a moveable operating device, and **in that** the moveable operating device is equipped with force feedback.

14. Use of a simulator apparatus (10) of anyone of claims 1 through 13 for simulating a minimally invasive intervention in the human or animal body.

## Revendications

1. Dispositif simulateur à au moins deux degrés de liberté destiné à un instrument (12) qui présente une tige oblongue (14), avec un dispositif de maintien (24) pour l'instrument (12), le dispositif de maintien (24) étant conformé en sorte que l'instrument (12) possède au moins un premier degré de liberté correspondant à un mouvement de rotation autour de l'axe longitudinal de la tige (14) et au moins un deuxième degré de liberté correspondant à un mouvement de translation dans la direction de la tige (14), le dispositif de maintien (24) présentant un système d'engrenages (70) pour le premier et le deuxième degrés de liberté, **caractérisé en ce que** le système d'engrenages présente une première roue conique (72) reliée à la tige (14) et tournant avec celle-ci autour de son axe longitudinal, et une deuxième et une troisième roues coniques (78, 80) qui sont placées de chaque côté de la première roue conique (72) et sont en prise de roulement avec celle-ci.

2. Dispositif simulateur selon la revendication 1, **caractérisé en ce que** la première roue conique (72) est en prise de roulement avec la tige (14) par l'intermédiaire d'un ou plusieurs pignons (86, 88) avec une denture (94) s'étendant longitudinalement sur la tige (14).

3. Dispositif simulateur selon la revendication 1 ou 2, **caractérisé en ce que** la deuxième et la troisième roues coniques (78, 80) sont disposées concentriquement à la tige (14).

4. Dispositif simulateur selon l'une des revendications 1 à 3, **caractérisé en ce que** le premier degré de liberté et le deuxième degré de liberté sont munis d'un retour de force.

5. Dispositif simulateur selon la revendication 4, **caractérisé en ce que** la deuxième et la troisième roues coniques (78, 80) sont munies chacune d'un ou plusieurs actionneurs (114,118) pour le retour de force.

6. Dispositif simulateur selon l'une des revendications 1 à 5, **caractérisé en ce que** le dispositif de maintien (24) présente de plus une suspension à cardan (25), de sorte que l'instrument (12) possède un troisième degré de liberté correspondant à un mouvement de bascule autour d'un premier axe de bascule (26) et un quatrième degré de liberté correspondant à un mouvement de bascule autour d'un deuxième axe de bascule (28) perpendiculaire au premier axe de bascule (26).

7. Dispositif simulateur selon la revendication 6, **caractérisé en ce que** la suspension à cardan (25) est formée par un élément en forme d'arceau (28), qui peut pivoter autour du premier axe de bascule (26), et un élément annulaire (36) pouvant basculer autour du deuxième axe de bascule (28), l'instrument (12) étant guidé sur l'élément en forme d'arceau (32).

8. Dispositif simulateur selon la revendication 7, **caractérisé en ce que** sur l'élément annulaire (36) sont fixés deux logements (42, 44) mutuellement opposés, décalés d'environ 90° par rapport au deuxième axe de bascule et destinés à un élément sphérique (46), à travers lesquels passe la tige (14), l'élément sphérique (46) étant tenu dans les logements (42, 44) de manière rotative par rapport aux logements (42, 44) autour d'un axe de rotation (52) passant par les deux logements, et de façon immobile par rapport aux logements (42, 44) dans la direction perpendiculaire à cet axe de rotation (52).

9. Dispositif simulateur selon la revendication 8, **caractérisé en ce que** le système d'engrenages (70) est placé dans l'élément sphérique (46).

10. Dispositif simulateur selon l'une des revendications 6 à 9, **caractérisé en ce que** le troisième et le quatrième degré de liberté sont munis d'un retour de force.

11. Dispositif simulateur selon la revendication 10, **caractérisé en ce qu'**il est prévu au moins un actionneur (56, 60) pour le retour de force sur le troisième et le quatrième degrés de liberté.

12. Dispositif simulateur selon l'une des revendications 1 à 11, **caractérisé en ce que**, pour déterminer la position de l'instrument (12), il est prévu pour au moins un degré de liberté, de préférence pour tous les degrés de liberté, à chaque fois un capteur de relevé de position (58, 62).

13. Dispositif simulateur selon l'une des revendications 1 à 12, **caractérisé en ce que** l'instrument (12) présente une poignée mobile, et **en ce que** la poignée mobile est munie d'un retour de force.

14. Utilisation d'un dispositif simulateur (10) selon l'une des revendications 1 à 13 pour simuler une intervention à invasion minimale sur le corps humain ou animal.
